# EUROPÄISCHE PATENTANMELDUNG

(11) **EP 1 488 983 A2**
(43) Veröffentlichungstag der Anmeldung: **22.12.2004**
(21) Anmeldenummer: 04013681.4
(22) Anmeldetag: 09.06.2004
(51) Int. Cl.: B62B 9/08

(54) **Kinderwagen mit Brems- oder Feststelleinrichtung**

(30) Priorität: 20.06.2003 DE 10327932
(71) Anmelder: HAUCK GmbH & Co. KG, 96242 Sonnefeld (DE)
(72) Erfinder: Feyler, Beatrice, 96242 Sonnefeld (DE)
(74) Vertreter: Meissner, Bolte & Partner

(57) **Zusammenfassung**

Kinderwagen mit einem auf Rädern (15, 18) verfahrbaren Rahmengestell, wobei wenigstens einem Rad eine kraft- oder formschlüssige Brems- oder Feststelleinrichtung zugeordnet ist. Die Brems- oder Feststelleinrichtung ist durch eine Betätigungseinrichtung (84) nach dem Kugelschreiberprinzip derart bedienbar, daß sie ausgehend von einer Radfreigabestellung bei einer Betätigung über eine vorbestimmte Betätigungsstrecke hinaus in einer die Räder blockierenden Stellung (Radblockierstellung) einrastet und bei einer weiteren Betätigung über die vorgenannte Betätigungsstrecke hinaus die Räder wieder freigibt.

## Beschreibung

Die Erfindung betrifft einen Kinderwagen gemäß dem Oberbegriff des Anspruchs 1.

Derartige Kinderwagen sind allgemein bekannt und weisen ein auf Rädern verfahrbares Rahmengestell auf, welches aus in zwei parallelen senkrechten Ebenen aneinander befestigten bzw. bei klappbaren Kinderwagen angelenkten, z.T. scherenartig angeordneten Gestellholmen und einem z.B. U-förmigen Griffbügel besteht, wobei entsprechende Gestellholme der beiden Ebenen jeweils ein Paar bilden. Ferner besitzen derartige Kinderwagen meist einen Aufsatz, der eine Sitzfläche und eine Rückenlehne aufweist. Des weiteren ist an jeder Seite des Kinderwagens ein sich in der Regel schräg von hinten oben nach vorne unten erstreckender Gestellholm angeordnet. Diese Gestellholme sind benutzerseitig durch einen Griffbügel miteinander verbunden.

Aus Gründen der Sicherheit und der leichteren Bedienbarkeit weisen viele Kinderwagen eine kraft- oder formschlüssige Brems- und/oder Feststelleinrichtung auf, die wenigstens einem Rad des Kinderwagens zugeordnet ist. Mit Hilfe dieser Brems- und/oder Feststelleinrichtung ist es dem Bediener möglich, das Rad (die Räder), auf das (auf die) die Brems- und/oder Feststelleinrichtung wirkt, bei Bedarf in eine Radblockierstellung zu bringen, um somit den Kinderwagen gegen unbeabsichtigtes Wegrollen zu sichern.

Eine sehr einfache Art einer Feststellbremse für einen Kinderwagen umfaßt ein durch eine Feder beaufschlagtes Bremselement, welches unmittelbar gegen die Lauffläche eines Rades drückbar ist. Aufgrund mit der Zeit nachlassender Federkraft (aufgrund der Alterung der Feder) und bei zunehmend abgefahrener Lauffläche des fraglichen Rades läßt die Bremskraft der Feststellbremse mit zunehmender Gebrauchsdauer des Kinderwagens nach. Um diesen Nachteil zu beseitigen, wurden Feststelleinrichtungen mit einem axial verschiebbaren Blockierelement vorgeschlagen, das entweder zwischen zwei Speichen eines Speichenrades oder in einen mit dem fraglichen Rad drehfest verbundenen Zahnkranz einführbar ist. Die Bedienung erfolgt für die beiden oben genannten Varianten für Feststelleinrichtungen im allgemeinen mittels eines Fußpedals, welches nach dem Niederdrücken durch einen Rastmechanismus in einer Radblockierstellung bleibt. Zum Lösen der Feststelleinrichtung, ist es nötig, das Fußpedal manuell aus der Blockierstellung herauszuziehen. Alternativ ist es auch möglich, das Fußpedal mit der Fußoberseite in die Freigabestellung zu bringen. Neben einer möglichen Verschmutzung bzw. Beschädigung des Oberleders bzw. Obermaterials der Schuhe kann eine derartige Bedienung, insbesondere im Sommer, wenn offene Schuhe getragen werden, zu Verletzungen des Fußes oder der Zehen des Bedieners führen.

Um diese Verletzungsgefahr beim Betätigen der Betätigungseinrichtung einer Feststelleinrichtung zu minimieren, ist in der EP 0621167 A1 eine Feststelleinrichtung für einen Kinder- oder Puppenwagen oder dgl. beschrieben, die zwei voneinander beabstandete Betätigungsorgane aufweist, die miteinander mittels eines Verbindungshebels verbunden sind. Ausgehend von einer Radfreigabestellung wird durch eine Betätigung des ersten Betätigungsorgans eine Bremsstange in eine Radblockierstellung gebracht. Befindet sich die Bremsstange in der Radblockierstellung und wird in diesem Zustand das zweite Betätigungsorgan betätigt, so wird die Bremsstange wiederum in Radfreigabestellung gebracht.

Die in der EP 0621167 A1 dargestellte Feststelleinrichtung weist neben dem Nachteil einer aufgrund der zwei vorhandenen Betätigungsorgane komplizierten Bedienung auch den Nachteil eines entsprechend großen konstruktiven Aufwands auf. Die Herstellung einer solchen Feststelleinrichtung ist aufgrund ihrer Komplexität und der hohen Anzahl benötigter Einzelteile kostenintensiv.

Aufgabe der vorliegenden Erfindung ist es somit, einen Kinderwagen mit einer Feststelleinrichtung anzugeben, die sich durch einfache sowie funktionssichere Bedienung sowie einfache Konstruktion auszeichnet.

Diese Aufgabe wird durch die kennzeichnenden Merkmale des Anspruchs 1 gelöst. Der Kern der vorliegenden Erfindung liegt also darin, daß die Brems- oder Feststelleinrichtung des Kinderwagens durch eine Betätigungseinrichtung nach dem Kugelschreiberprinzip derart bedienbar ist, daß sie ausgehend von einer Radfreigabestellung bei einer Betätigung über eine vorbestimmte Betätigungsstrecke hinaus in einer die Räder blockierenden Stellung (Radblockierstellung) einrastet und bei einer weiteren Betätigung über die vorgenannte Betätigungsstrecke hinaus die Räder wieder freigibt. Der erfindungsgemäße Kinderwagen besitzt somit also eine Brems- oder Feststelleinrichtung, die sich durch eine Betätigungseinrichtung auszeichnet, die einerseits leicht und ohne Verletzungsgefahr bedienbar ist und die sich aus wenigen Einzelteilen zusammensetzt, was eine kostengünstige Herstellung derselben sicherstellt. Geht man von einer Radfreigabestellung als Startposition aus, so bewirkt eine einmalige Betätigung der Betätigungseinrichtung eine Radblockierstellung, wobei eine weitere Betätigung derselben in derselben Art oder Richtung, die zur Radfeststellung bzw. -blockierung führt, die Räder wieder freigibt.

In einer bevorzugten Ausführungsform erfolgt die Betätigung der Betätigungseinrichtung gegen die Wirkung eines elastischen Elements, insbesondere einer Feder. Die Konstruktion mit Hilfe eines elastischen Elements, insbesondere einer Feder, bietet die Möglichkeit, die Betätigungseinrichtung, ausgehend von einer Radfreigabestellung bei einer zweiten in Folge stattfindenden Betätigung einfach, d.h. ohne großen konstruktiven Aufwand wieder in die Radfreigabestellung zurückzustellen.

In einer weiteren bevorzugten Ausführungsform weist die Betätigungseinrichtung ein erstes ortsfestes Element sowie ein relativ dazu bewegliches zweites Element, insbesondere Betätigungsorgan auf, wobei an einem dieser beiden Elemente eine Kulissenbahn ausgebildet ist, in die ein die beiden Elemente miteinander koppelnder Kulissenschieber eingreift. Diese Ausführungsform zeichnet sich durch eine extrem einfache und somit kostengünstig herzustellende Konstruktion aus, wobei die Mechanik nicht zuletzt aufgrund ihrer Einfachheit störunanfällig ist.

Weitere Vorteile der Erfindung ergeben sich aus der nachstehenden Beschreibung eines Ausführungsbeispiels eines erfindungsgemäß ausgebildeten Kinderwagens, der anhand der beigefügten Zeichnungen im folgenden näher erläutert wird. Diese zeigen in:
- Fig. 1: einen erfindungsgemäß ausgebildeten Kinderwagen in Seitenansicht;
- Fig. 2: einen erfindungsgemäß ausgebildeten Kinderwagen von hinten;
- Fig. 3: die Kulissenbahn, die Teil einer Rad-Feststelleinrichtung ist;
- Fig. 4a-e: eine Prinzipskizze, die das Zusammenwirken der in Fig. 3 dargestellten Kulissenbahn mit einem Kulissenschieber anhand des Bewegungsablaufs des Kulissenschiebers verdeutlicht;
- Fig.5: die Betätigungseinrichtung der Feststelleinrichtung eines erfindungsgemäßen Kinderwagens;
- Fig. 6a: die Feststelleinrichtung eines erfindungsgemäßen Kinderwagens in Radfreigabestellung;
- Fig 6b: die Feststelleinrichtung eines erfindungsgemäßen Kinderwagens in Radblockierstellung; und
- Fig. 7: einen Ausschnitt eines Rades eines erfindungsgemäßen Kinderwagens.

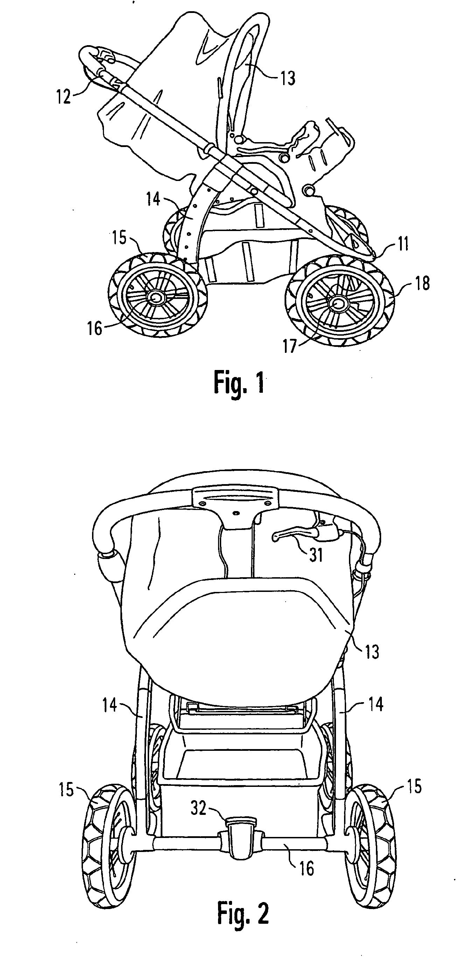

Der in Fig. 1 dargestellte Kinderwagen umfaßt eine Rahmenkonstruktion, die sich aus zwei miteinander verbundenen bzw. aneinander angelenkten Holmkonstruktionen, nämlich einem vorderen 11 und einem hinteren 12 U-förmigen Holm zusammensetzt, wobei die beiden Holme mit ihren freien Schenkelenden einander zugekehrt montiert sind. Zwischen den Schenkeln der beiden Holme ist ein Aufsatz 13 mit einer Sitzfläche und einer Rückenlehne positionierbar. Des weiteren ist an jeder Seite des Kinderwagens ein sich von den vorgenannten Holmen 11, 12 zu den Hinterrädern 15 erstreckender Stützholm 14 vorgesehen.

An den unteren Enden der Stützholme 14 ist jeweils ein Lager für eine den Hinterrädern 15 zugeordnete Achse 16 (Hinterachse) ausgebildet. Die Vorderräder 18 sind an einer vorderen Achse 17 drehbar gelagert. Diese befindet sich am vorderen Ende des vorderen Holms 11. Die Vorderräder 18 sind des weiteren jeweils um eine senkrechte Achse verschwenkbar gelagert, wodurch der Kinderwagen lenkbar ist.

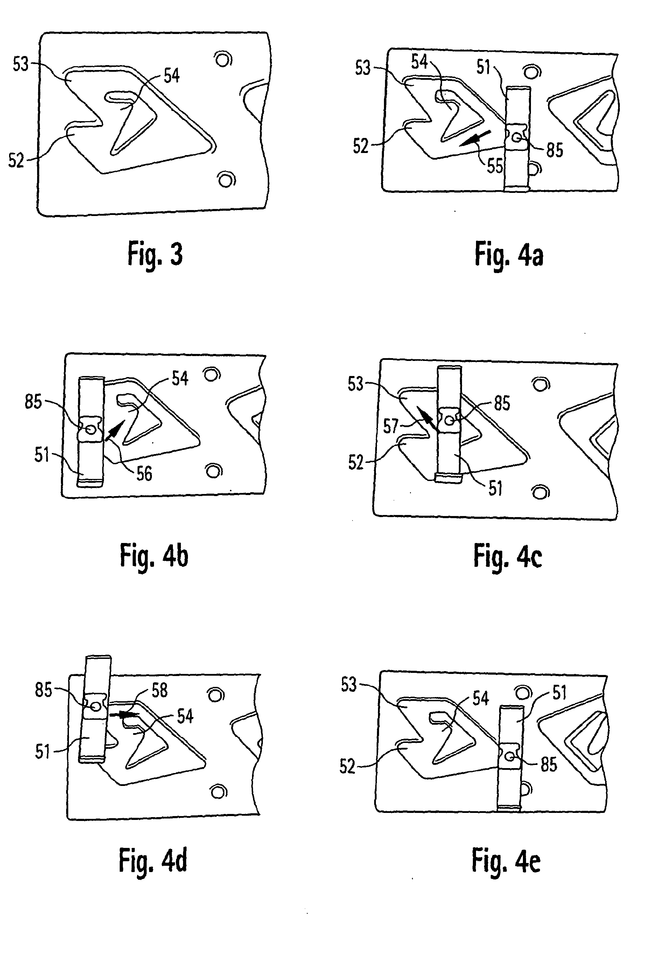

Bei einer Betrachtung des erfindungsgemäßen Kinderwagens von hinten (vgl. Fig. 2) wird deutlich, daß die hinteren Laufräder 15 eine gemeinsame Hinterachse 16 besitzen, an der die eben genannten Laufräder 15 drehbar gelagert sind. Die Hinterräder 15 können durch Betätigung eines Bremshebels 31 am Schiebergriff gebremst werden. Weiterhin kann durch die Betätigung eines der Hinterachse 16 zugeordneten Fußpedals 32 eine Rad-Feststelleinrichtung betätigt werden. Diese funktioniert, wie bereits weiter oben erläutert, nach dem Kugelschreiberprinzip und ist derart bedienbar, daß ausgehend von einer Radfreigabestellung bei einer Betätigung über eine vorbestimmte Betätigungsstrecke hinaus eine Betätigungseinrichtung 84 bzw. ein zugeordnetes Betätigungsorgan in einer die Räder blockierenden Stellung (Radblockierstellung) einrastet und bei einer weiteren Betätigung in derselben Art bzw. Richtung über die vorgenannte Betätigungsstrecke hinaus die Räder wieder freigegeben werden. Die Betätigung des Betätigungsorgans erfolgt gegen die Wirkung einer Feder. Die Betätigungseinrichtung 84 umfaßt ein erstes ortsfestes Element, das in der zylindrischen Hinterachse integriert ist sowie ein relativ dazu bewegliches Element, nämlich das als Fußpedal 32 ausgebildete Betätigungsorgan, wobei an einem dieser beiden Elemente eine Kulisse 50 ausgebildet ist, in die ein die beiden Elemente miteinander koppelnder Kulissenschieber 51 eingreift (vgl. Fig. 3 und 4a-e). Das nicht die Kulissenbahn aufweisende Element besitzt eine Aussparung zur Aufnahme eines Kulissenschiebers, insbesondere in Form einer sich quer zur Betätigungsrichtung des Betätigungsorgans, hier Fußpedal 32, erstreckenden Aufnahmenut, innerhalb der der Kulissenschieber 51, insbesondere in Form eines Metall- oder Kunststoffriegels, der einen sich in die Kulissenbahn hineinerstreckenden Führungszapfen 85 aufweist, hin- und herverschiebbar gelagert ist.

Die Kulissenbahn 50 ist, wie aus Fig. 3 ersichtlich, etwa herzförmig ausgebildet und besitzt zwei Endpunkte 52, 53 und einen zwischen den Endpunkten liegenden Rastpunkt 54.

Der Bewegungsablauf des erwähnten Führungszapfens 85 des Kulissenschiebers 51 in der Kulissenbahn 50 ist in den Figuren 4a bis 4e anhand eines vollständigen Zyklus des Kulissenschiebers 51 dargestellt. Ausgehend von einer Anfangsposition, die einer Radfreigabestellung am erfindungsgemäßen Kinderwagen entspricht und in Fig. 4a dargestellt ist, wird der Führungszapfen 85 des Kulissenschiebers 51 beim Niederdrücken des Fußpedals 32 der Kulissenbahn 50 folgend (angedeutet durch den Pfeil 55) zum Endpunkt 52 bewegt (Fig. 4b). Wird das Fußpedal 32 entlastet, so folgt der Führungszapfen 85 des Kulissenschiebers 51 aufgrund der rückstellenden Wirkung der Feder, hier Torsionsfeder (nicht dargestellt), der Kulissenbahn 50 (angedeutet durch den Pfeil 56) bis zum Rastpunkt 54 (Fig. 4c). Die Hinterräder 15 des erfindungsgemäßen Kinderwagens befinden sich in Radblockierstellung. Durch erneutes Niederdrücken des Fußpedals 32 wird (angedeutet durch den Pfeil 57) der Führungszapfen 85 des Kulissenschiebers 51 zum zweiten Endpunkt 53 bewegt (Fig. 4d). Bei einer Entlastung des Fußpedals 32 bewirkt die Rückstellkraft der Torsionsfeder, daß der Führungszapfen des Kulissenschiebers 51 wieder in seine Ausgangsposition zurückkehrt (angedeutet durch den Pfeil 58), die in Fig. 4e als Ende des Zyklus nochmals dargestellt ist.

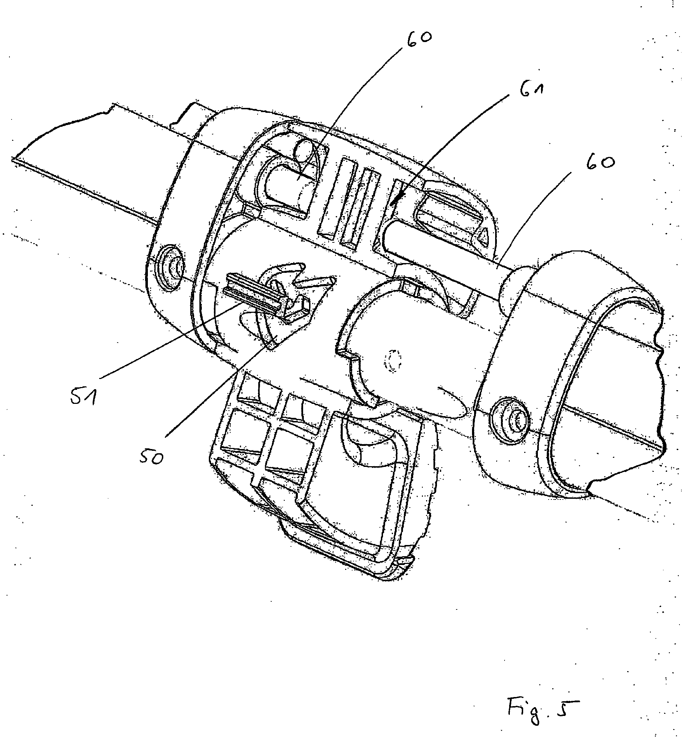

Im erfindungsgemäßen Kinderwagen ist die Kulissenbahn 50 nicht, wie in den Prinzipskizzen der Figuren 3 und 4a bis 4e in einer Translationsebene angeordnet, sondern sie erstreckt sich in einer Rotationsebene (vgl. Fig. 5), wobei das Fußedal 32, das das zugeordnete Betätigungsorgan darstellt, entsprechend rotatorisch bewegbar ist. An dieser Stelle sei erwähnt, daß selbstverständlich auch die Möglichkeit besteht, die Kulissenbahn 50 so anzuordnen, daß sie sich in einer Translationsebene erstreckt, wobei das zugeordnete Betätigungsorgan dann entsprechend translatorisch bewegbar ist. Die Betätigungseinrichtung 84 für die Feststelleinrichtung eines erfindungsgemäßen Kinderwagens ist nicht an eine bestimmte Bauform gebunden, was den Vorteil bietet, diesen Betätigungsmechanismus nicht nur an einer zylinderförmigen Achse anbringen zu können, sondern auch an einer beliebigen anderen Stelle des Kinderwagens bzw. in einem beliebigen anderen Bauteil desselben. Als Alternative zum Fußpedal 32 ist auch ein Bedienungsorgan vorstellbar, das vorzugsweise mit der Hand bedienbar ist, wie z.B. ein Hebel.

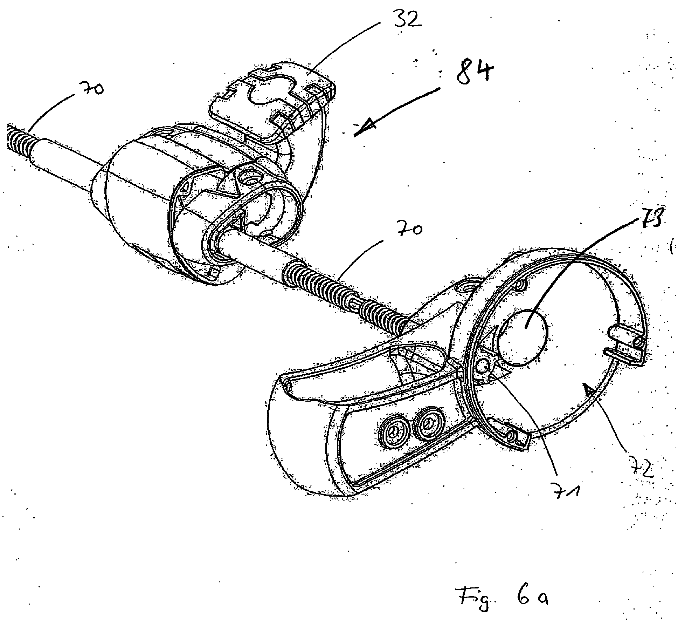

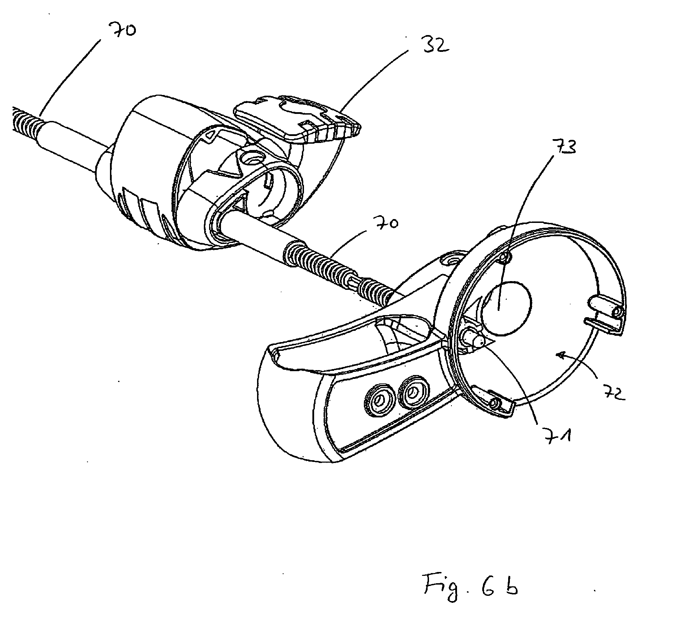

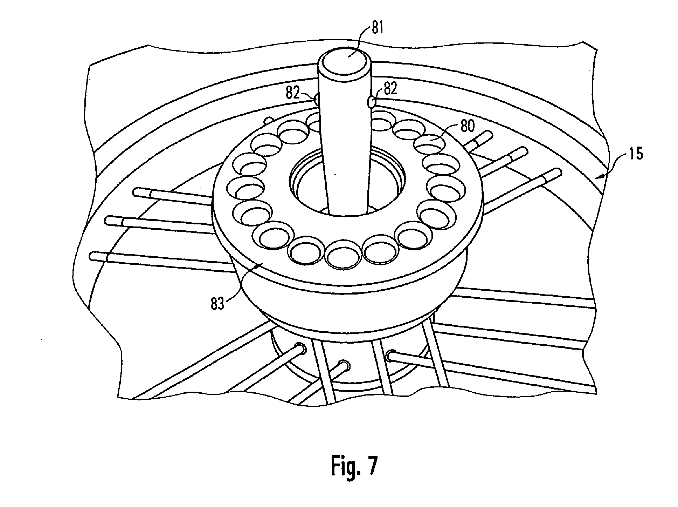

Bei einer Betätigung des Fußpedals 32 (wiederum ausgehend von einer Radfreigabestellung der Feststelleinrichtung) werden zwei Bolzenstäbe 60, die sich ausgehend von der zentral an der Hinterachse angeordneten Feststelleinrichtung jeweils parallel zur Hinterachse zu den beiden Hinterrädern erstrecken, durch mit dem Fußpedal 32 wirkverbundene Nockenflächen 61 in Form von sich in Umfangsrichtung erstreckenden schrägen Ebenen axial nach außen gedrängt, d.h. in Radblockierstellung bewegt. Diese Axialbewegung erfolgt gegen die Wirkung von Schraubendruckfedern 70 (vgl. Fig. 6a und 6b), die zwischen jeweils einem Radlagergehäuse und einem axial inneren Ende der Bolzenstäbe wirksam sind, so daß die Bolzenstäbe 60 stets nach innen in die Radfreigabestellung vorgespannt sind. Fig. 6a stellt die Feststelleinrichtung in Radfreigabestellung dar. In dieser Stellung sind die freien, d.h. axial äußeren Enden 71 der Bolzenstäbe 60 in eingerückter bzw. zurückgezogener Stellung. Die freien Enden 71 der Bolzenstäbe 60 schließen jeweils bündig mit der äußeren Stirnfläche der Radlagergehäuse 72 ab. In Fig. 6b ist die Feststelleinrichtung in Radblockierstellung dargestellt. Die Bolzenstäbe 60 werden dabei durch die erwähnten Nockenflächen 61 in ausgerückter Position gehalten. Die freien Enden 71 der Bolzenstäbe 60 stehen dabei über die erwähnten Stirnflächen der Radlagergehäuse 72 vor. In dieser Stellung greifen die freien Enden 71 der Bolzenstäbe 60 in eine korrespondierende Ausnehmung bzw. Bohrung, insbesondere Sackbohrung 80 ein, die an der Innenseite einer mit dem jeweiligen Hinterrad verbundenen Scheibe ausgebildet ist. Entsprechend Fig. 7 sind an der Innenseite der erwähnten Scheibe 83 eine Vielzahl von sich über den Umfang erstreckende Sackbohrungen 80 ausgebildet, wobei die Bohrungsöffnungen jeweils trichterartig erweitert sind, um die Einführung des freien Endes 71 der Bolzenstäbe 60 zu erleichtern. In entsprechender Weise sind die freien Enden 71 der Bolzenstäbe 60 abgerundet, wodurch die Einrastung in die Sacklochbohrungen 80 ebenfalls erleichtert wird.

Das in Fig. 7 dargestellte Teil Hinterrades umfaßt einen Achsbolzen 81, der in eine entsprechende Aufnahmebohrung 73 (Fig. 6a, 6b) des Radlagergehäuses 72 einführbar und innerhalb derselben arretierbar ist. Zu diesem Zweck umfaßt der Achsbolzen 81 zwei diametral zueinander angeordnete Rastkugeln 82, die durch nicht näher dargestellte elastische Elemente, insbesondere Schraubendruckfedern, in "Verriegelungsposition" vorgespannt sind, d.h. radial nach außen. In Verriegelungsstellung erstrecken sich die erwähnten Rastkugeln 82 in eine korrespondierende Umfangsnut innerhalb der Aufnahmebohrung 73 hinein. Damit ist das entsprechende Rad sicher gehalten. Dieser Arretiermechanismus läßt sich durch ein in der Radnabe axial verschiebbares Element entriegeln, mit dem die vorgenannte elastische Vorspannung der Rastkugeln 82 aufhebbar ist. Bei dem vorgenannten Element handelt es sich vorzugsweise um einen axial verschieblichen Druckstab, der gegen die Wirkung einer Feder zum Zwecke der Entriegelung nach innen drückbar ist. Dementsprechend lassen sich die Räder, zumindest die Hinterräder für einen platzsparenden Transport des Kinderwagens in einfacher Weise entfernen, und bei Bedarf auch wieder auf die zugeordnete Achse aufstecken.

Die vorgenannte Beschreibung zeigt, daß mit relativ einfachen Maßnahmen eine sehr funktionssichere Feststelleinrichtung geschaffen ist. Kulissenbahn 50, Betätigungsorgan bzw. Fußpedal 32 sowie Kulissenschieber 51 werden vorzugsweise aus Leichtmetall, z.B. Aluminium und/oder Kunststoff hergestellt (Spritzgußteile).

Statt der beschriebenen Bolzenstäbe 60 kann auch ein Bowdenzug-Mechanismus vorgesehen sein, der zwischen Feststelleinrichtung und Verriegelungsbolzen entsprechend den freien Enden 71 der Bolzenstäbe 60 wirksam ist.

Grundsätzlich ist es auch denkbar, die Feststelleinrichtung mit dem Fußpedal 32 nur einem einzigen Hinterrad zuzuordnen und dann unmittelbar an der Innenseite desselben zu plazieren.

Bei Verwendung eines Bowdenzugs zwischen Feststelleinrichtung und Rad-Arretierbolzen ist es auch denkbar, die Feststelleinrichtung samt zugeordnetem Betätigungsorgan am Schieber zu montieren, so daß das Betätigungsorgan manuell betätigt werden kann. Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 11: vorderer Holm
- 12: hinterer Holm
- 13: Aufsatz
- 14: Stützholm
- 15: Hinterrad
- 16: Hinterachse
- 17: Vorderachse
- 18: Vorderrad
- 31: Bremshebel
- 32: Fußpedal
- 50: Kulissenbahn
- 51: Kulissenschieber
- 52: Endpunkt
- 53: Endpunkt
- 54: Rastpunkt
- 55: Pfeil
- 56: Pfeil
- 57: Pfeil
- 58: Pfeil
- 60: Bolzenstab
- 61: Nockenfläche
- 70: Feder
- 71: freies Ende des Bolzenstabes 60
- 72: Radlagergehäuse
- 73: Bohrung
- 80: Sackbohrung
- 81: Achsbolzen
- 82: Rastkugel
- 83: Scheibe
- 84: Betätigungseinrichtung
- 85: Führungszapfen

## Patentansprüche

1. Kinderwagen mit einem auf Rädern (15, 18) verfahrbaren Rahmengestell,
wobei wenigstens einem Rad eine kraft- oder formschlüssige Brems- oder Feststelleinrichtung zugeordnet ist,
**dadurch gekennzeichnet, daß**
die Brems- oder Feststelleinrichtung durch eine Betätigungseinrichtung (84) nach dem Kugelschreiberprinzip derart bedienbar ist, daß sie ausgehend von einer Radfreigabestellung bei einer Betätigung über eine vorbestimmte Betätigungsstrecke hinaus in einer die Räder blockierenden Stellung (Radblbckierstellung) einrastet und bei einer weiteren Betätigung über die vorgenannte Betätigungsstrecke hinaus die Räder wieder freigibt.

2. Kinderwagen nach Anspruch 1,
**dadurch gekennzeichnet, daß**
die Betätigung der Betätigungseinrichtung (84) gegen die Wirkung eines elastischen Elements, insbesondere einer Feder, erfolgt.

3. Kinderwagen nach Anspruch 1 oder 2,
**dadurch gekennzeichnet, daß**
die Betätigungseinrichtung (84) ein erstes ortsfestes Element sowie ein relativ dazu bewegliches zweites Element, insbesondere Betätigungsorgan (32) aufweist, wobei an einem dieser beiden Elemente eine Kulissenbahn (50) ausgebildet ist, in die ein die beiden Elemente miteinander koppelnder Kulissenschieber (51) eingreift.

4. Kinderwagen nach Anspruch 3,
**dadurch gekennzeichnet, daß**
die Kulissenbahn (50) etwa herzförmig mit zwei Endpunkten (52, 53) und einem dazwischen liegenden Rastpunkt (54) ausgebildet ist.

5. Kinderwagen nach Anspruch 3 oder 4,
**dadurch gekennzeichnet, daß**
die Kulissenbahn (50) sich in einer Translations- oder Rotationsebene erstreckt, wobei das zugeordnete Betätigungsorgan (32) entsprechend translatorisch oder rotatorisch bewegbar ist.

6. Kinderwagen nach Anspruch 5,
**dadurch gekennzeichnet, daß**
das Betätigungsorgan (32) ein Fußpedal ist.

7. Kinderwagen nach einem der Ansprüche 1-6,
**dadurch gekennzeichnet, daß**
die Betätigungseinrichtung an einer, insbesondere um eine, gemeinsame(n) Achse für die Hinterräder (16) angeordnet ist.

8. Kinderwagen nach einem der Ansprüche 3-7,
**dadurch gekennzeichnet, daß**
das die Kulissenbahn (50) umfassende Bauteil, das Betätigungsorgan (32) sowie der Kulissenschieber (51) aus Metall und/oder Kunststoff bestehen.

9. Kinderwagen nach einem der Ansprüche 3-8,
**dadurch gekennzeichnet, daß**
das Betätigungsorgan (32) oder ein damit unmittelbar verbundenes Bauteil mit der Rad-Brems- oder Feststelleinrichtung gekoppelt ist.
